(19) Europäisches Patentamt / European Patent Office / Office européen des brevets

(11) **EP 2 753 544 B1**

(12) **FASCICULE DE BREVET EUROPEEN**

(45) Date de publication et mention
de la délivrance du brevet:
**01.11.2017   Bulletin 2017/44**

(21) Numéro de dépôt: **12762347.8**

(22) Date de dépôt: **03.09.2012**

(51) Int Cl.:
**B64D 31/12** *(2006.01)*     **F02C 9/42** *(2006.01)*

(86) Numéro de dépôt international:
**PCT/FR2012/051968**

(87) Numéro de publication internationale:
**WO 2013/034839 (14.03.2013 Gazette 2013/11)**

(54) **PROCÉDÉ DE SYNCHRONISATION DES MOTEURS D'UN AVION**

VERFAHREN ZUR SYNCHRONISATION DER TRIEBWERKE EINES FLUGZEUGS

METHOD OF SYNCHRONISING THE ENGINES OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.09.2011   FR 1158051**

(43) Date de publication de la demande:
**16.07.2014   Bulletin 2014/29**

(73) Titulaire: **SNECMA
75015 Paris (FR)**

(72) Inventeurs:
• **NOBELEN, Florent
77550 Moissy Cramayel Cedex (FR)**
• **DJELASSI, Cedrik
77550 Moissy Cramayel Cedex (FR)**

(74) Mandataire: **Pichat, Thierry et al
Ernest Gutmann - Yves Plasseraud SAS
3, rue Auber
75009 Paris (FR)**

(56) Documents cités:
**EP-A1- 0 025 406     EP-A2- 0 322 342
GB-A- 2 225 134     US-A- 5 224 340**

**Description**

La présente invention concerne un procédé de synchronisation des moteurs d'un avion, et en particulier des turboréacteurs à double corps d'un avion.

Une petite différence dans les vitesses de rotation des moteurs d'un avion peut provoquer un bruit acoustique et des vibrations indésirables. Il est connu de synchroniser (voir, par exemple, le document EP0322342) les corps basse-pression (BP) ou haute-pression (HP) des moteurs à double corps d'un avion pour diminuer les vibrations ressenties dans la cabine et le bruit et ainsi augmenter le confort des passagers.

Cependant, cette fonction de synchronisation ne répond qu'à des exigences de confort et ne doit pas engendrer de risques pour les moteurs ou l'avion. La synchronisation des moteurs est donc désactivée si des conditions de sécurité ne sont pas remplies, même si une demande d'activation de la synchronisation est émise par le pilote et que les conditions d'activation de la synchronisation sont toutes remplies. Ces conditions de sécurité représentent par exemple des valeurs limites qui ne doivent pas être atteintes pour que la synchronisation soit activée et maintenue. Ces valeurs sont par exemple des vitesses minimale et maximale du rotor du corps HP de chaque moteur (N2min, N2max), une pression statique maximale dans la chambre de combustion de chaque moteur (Ps3max), et des valeurs limites inférieure (risque de perte de poussée) et supérieure (risque de pompage) du rapport Q de dimensionnement de chaque moteur (Q = débit de carburant / Ps3max).

Cependant, les conditions de sécurité ne peuvent pas être toutes vérifiées à chaque fois qu'une demande d'activation de la synchronisation est émise par le pilote car cela nuirait à l'efficacité du moteur, c'est pourquoi l'activation de la synchronisation ne se fait pas uniquement sur simple demande du pilote et nécessite la vérification de conditions supplémentaires.

Le document FR-A1-2 639 444 décrit un procédé de synchronisation d'un moteur asservi et d'un moteur maître dans un avion, ces moteurs étant des turboréacteurs à double corps et comprenant chacun un rotor de soufflante et un rotor de générateur de gaz. La vitesse de rotation de la soufflante ou du rotor du corps basse-pression du moteur asservi (appelée N1) et celle du générateur de gaz ou du rotor du corps haute-pression du moteur asservi (appelée N2) peuvent être commandées en régulant le débit d'alimentation en carburant du moteur, en modifiant le calage angulaire des aubes de stator du moteur, etc.

Dans ce document, l'activation de la synchronisation se fait lorsque la différence entre les vitesses précitées des soufflantes (ΔN1) des deux moteurs devient inférieure à 100tr/min et elle se désactive lorsque cette différence dépasse cette valeur, ou lorsque l'un des moteurs s'arrête ou cale, ou lorsque l'un des signaux N1 n'est pas détecté, ou lorsque le rapport PLA/N2 du moteur asservi dépasse une certaine limite (l'abréviation PLA - *Power Level Angle* - correspondant à la position de la manette des gaz dans le cockpit de l'avion). Le pilote de l'avion est informé de la désactivation de la synchronisation. La synchronisation se réactive automatiquement quand la différence ΔN1 redescend sous la barre des 100tr/min. Ce procédé est entièrement automatique et ne requiert pas d'ordre spécifique de la part du pilote de l'avion.

Ce type de synchronisation présente l'inconvénient d'être entièrement automatique. En effet, la synchronisation des moteurs est réactivée lorsque toutes les conditions sont à nouveau remplies, sans demande spécifique du pilote de l'avion. Il se peut toutefois que ces conditions présentent un risque pour les moteurs ou pour l'avion (cas de pompage ou de survitesse des moteurs par exemple) et qu'il soit dangereux de réactiver automatiquement la synchronisation des moteurs. Par ailleurs, quand ces conditions ne présentent aucun risque pour les moteurs ou l'avion (cas de régime transitoire des moteurs par exemple), il ne paraît pas souhaitable d'exiger une validation du pilote pour la réactivation de la synchronisation car cela pourrait avoir pour conséquence que le pilote soit distrait et déconcentré par d'éventuels multiples changements des résultats de ces conditions (ballottement vrai/faux).

En outre, lorsqu'une synchronisation est automatiquement activée, la valeur de consigne de la vitesse N1 (ou N2) du moteur esclave s'aligne sur la valeur de la vitesse du moteur maître et s'écarte ainsi de sa consigne originale, qui était calculée pour fournir la poussée requise de manière optimale. Du fait de la synchronisation des régimes, la poussée de ce moteur n'est plus optimale : elle est soit augmentée, diminuant la durée de vie du moteur, soit diminuée, obligeant le pilote à pousser la manette des gaz, ce qui revient donc au même. C'est un inconvénient majeur des logiques d'activation entièrement automatiques: les performances d'un moteur sont dégradées pour la synchronisation, même quand cela n'est pas nécessaire, par exemple quand les vibrations restent à un niveau acceptable, ce que seul le pilote est à même d'apprécier. Il est donc utile d'introduire un ordre du pilote dans l'activation de la synchronisation, bien que cela puisse poser des problèmes dans certains cas, comme expliqué dans ce qui précède.

L'invention a notamment pour but d'apporter une solution simple, efficace et économique à ces problèmes de la technique antérieure.

Elle a pour objet un procédé de synchronisation dans lequel la ou les logiques d'activation de la synchronisation permettent une réactivation automatique de la synchronisation lorsque cela ne présente aucun risque pour les moteurs ou l'avion, et exigent une validation par le pilote lorsqu'au contraire il pourrait exister un risque pour les moteurs ou l'avion.

Elle propose à cet effet un procédé de synchronisation des moteurs d'un avion au moyen d'au moins une logique d'activation destinée à vérifier des conditions de sécurité pour l'activation de la synchronisation et des conditions d'activation de la synchronisation, où la logique d'activation définit au moins un état désactivé, un état armé et un état activé de la synchronisation et comprend :

- le passage de la synchronisation de l'état désactivé à l'état armé lorsqu'un ordre d'activation est donné par un pilote de l'avion ;
- le passage de la synchronisation de l'état armé à l'état activé lorsque certaines conditions de sécurité et/ou d'activation sont remplies ; et
- le passage de la synchronisation de l'état activé ou armé à l'état désactivé lorsqu'un ordre de désactivation est donné par le pilote ou lorsque des conditions de sécurité ne sont pas remplies,
- le passage de la synchronisation de l'état activé à l'état armé lorsque certaines conditions d'activation ne sont pas remplies.

La logique d'activation du procédé selon l'invention comprend ainsi au moins un état d'activation de la synchronisation supplémentaire par rapport à ce qui est prévu dans la technique antérieure, où la synchronisation est soit désactivée (mode OFF), soit activée (mode ON), la synchronisation selon l'invention pouvant adopter au moins un état armé en mode OFF, en plus de l'état désactivé.

Les conditions de réactivation de la synchronisation sont également différentes en fonction de l'état de la synchronisation en mode OFF.

Dans le cas où la synchronisation est à l'état désactivé, un ordre d'activation doit être émis par le pilote pour passer la synchronisation à l'état armé. Dans le cas où au moins certaines conditions de sécurité et/ou d'activation sont remplies, la synchronisation passe alors de l'état armé à l'état activé.

Les conditions de sécurité sont différentes des conditions d'activation et doivent être remplies pour protéger les moteurs et l'avion. Ces conditions de sécurité sont par exemple : l'absence de pompage des moteurs, de survitesse des moteurs, de sous ou sur-poussée des moteurs, de panne majeure des moteurs, etc. Ces conditions permettent par exemple d'éviter qu'un moteur sain suive le comportement d'un moteur défaillant.

Les conditions d'activation de la synchronisation doivent être remplies pour optimiser le fonctionnement des moteurs, car la synchronisation n'est pas adaptée à tous les régimes de fonctionnement et peut être différente selon le type de régime (HP ou BP) synchronisés des moteurs. Les conditions d'activation sont par exemple une différence de consignes de vitesse des corps BP et/ou HP des moteurs inférieure à 10% environ, de préférence inférieure à 5%, et plus préférentiellement inférieure à 2% ; une différence de vitesses des corps BP et/ou HP des moteurs inférieure à 10% environ, de préférence inférieure à 5%, et plus préférentiellement inférieure à 2%, une différence entre la consigne et la vitesse mesurée du corps BP et/ou HP d'un moteur inférieure à 10% environ, de préférence inférieure à 5%, et plus préférentiellement inférieure à 2%, un régime de croisière, transitoire, de ralenti, ou différent du décollage et de l'atterrissage.

Dans le cas où la synchronisation est à l'état armé ou activé, un ordre de désactivation peut être émis par le pilote. Le passage de l'état activé ou armé à l'état désactivé est toutefois automatique dans le cas où au moins une partie des conditions de sécurité ne sont pas remplies.

Le procédé de synchronisation selon l'invention comprend donc deux types d'activation ou réactivation, à savoir une réactivation automatique et une réactivation ordonnée par le pilote de l'avion. La réactivation automatique est réalisée lorsque seules des conditions d'activation ont changé (les conditions de sécurité étant toujours remplies) et la réactivation à confirmer par le pilote est réalisée lorsque des conditions de sécurité ont changé (quel que soit le résultat de la vérification des conditions d'activation).

En pratique, on installe dans la cabine de pilotage de l'avion au moins un bouton d'activation de la synchronisation, et en particulier deux boutons dans le cas où les moteurs sont du type à double corps (HP et BP). Le premier bouton est destiné à commander l'activation de la synchronisation des corps BP des moteurs (N1Sync) et le second est destiné à commander l'activation de la synchronisation des corps HP des moteurs (N2Sync). Chaque bouton peut adopter deux positions, une position ON (par exemple enfoncée et allumée) et une position OFF (sortie et éteinte). Le pilote ne peut pas demander simultanément la synchronisation des deux corps. Dans le cas où il appuie sur le premier bouton pour l'enfoncer, alors que le second bouton est déjà en position enfoncée, ce second bouton se désenclenche automatiquement pour revenir en positon sortie.

Le pilote de l'avion doit donc appuyer sur l'un des boutons pour requérir l'activation de la synchronisation, qui passe alors de l'état désactivé à l'état armé. Comme expliqué dans ce qui précède, la synchronisation passe de l'état armé à l'état activé lorsqu'au moins certaines conditions de sécurité et/ou d'activation sont remplies. Dans le cas où le pilote appuie à nouveau sur le bouton pour annuler son ordre, la synchronisation passe à l'état désactivé. La synchronisation passe à l'état désactivé dans le cas également où au moins une partie des conditions de sécurité ne sont pas remplies. Dans ce dernier cas, la synchronisation est à l'état désactivé alors que le bouton de la cabine de pilotage peut être toujours enfoncé et allumé. Le pilote doit alors appuyer à deux reprises sur le bouton, de façon à le mettre en position sortie puis à nouveau en position enfoncée, pour passer la synchronisation à l'état armé. L'ordre du pilote est dans ce cas nécessaire pour le réarmement de la synchronisation.

L'invention permet d'optimiser la disponibilité de la fonction synchronisation et les performances des moteurs, en dissociant les cas où une réactivation de la synchronisation peut être réalisée automatiquement sans risque, et les cas où un ordre du pilote est nécessaire pour cette réactivation.

Les moyens d'exécution du procédé selon l'invention peuvent par exemple comprendre une puce électronique dans laquelle est codée au moins une logique d'activation, des portes logiques (ET, OU, NON, etc.), et des moyens de sommation, de comparaison, de détection de front, de condition, etc.

Les conditions d'application et de maintien de la synchronisation peuvent être vérifiées à intervalles réguliers, par exemple toutes les 30ms.

La logique d'activation comprend de préférence un passage de l'état activé à l'état armé lorsqu'au moins certaines conditions d'activation ne sont plus remplies. C'est par exemple le cas où la synchronisation n'est plus appropriée car l'avion est en phase de décollage ou d'atterrissage et n'est donc pas en vol croisière.

Selon une autre caractéristique du procédé selon l'invention, la logique d'activation définit deux états activés distincts, comprenant un état activé garanti et un état activé non garanti ou d'essai (ou « synchro attempt »). La logique d'activation comprend alors quatre états d'activation, deux en mode ON (état activé garanti et état activé non garanti) et deux en mode OFF (état désactivé et état armé).

La logique d'activation peut comprendre un passage de l'état armé à l'état activé non garanti si une partie prédéfinie seulement des conditions d'activation sont remplies, et à l'état activé garanti si toutes les conditions d'activation sont remplies. La synchronisation peut passer de l'état activé non garanti à l'état activé garanti, ou inversement, en fonction de changements intervenus dans les résultats des vérifications des conditions d'activation.

Lorsque la synchronisation est à l'état activé non garanti, elle n'est pas désactivée. La différence par rapport à l'état activé garanti peut être au niveau de l'affichage dans la cabine de pilotage, pour signaler au pilote que, dans cet état, qui correspond par exemple à un régime transitoire ou de ralenti, le fonctionnement de la synchronisation n'est pas garanti. Cependant, comme cela sera décrit dans ce qui suit, les moteurs peuvent avoir des régimes très proches, comme s'ils étaient vraiment synchronisés. Il n'y a donc pas d'intérêt de désactiver la synchronisation dans ce cas. Si toutes les conditions d'activation sont remplies, la synchronisation repassera à l'état activé.

Lorsque les moteurs sont du type à double corps et comprennent un corps basse-pression (BP) et un corps haute-pression (HP), l'activation de la synchronisation des corps BP des moteurs est avantageusement réalisée selon une première logique d'activation et l'activation de la synchronisation des corps HP des moteurs est réalisée selon une seconde logique d'activation. Les conditions d'activation de la synchronisation des corps BP sont différentes de celles de la synchronisation des corps HP, la logique d'activation de la synchronisation des corps HP pouvant différer de celle des corps BP notamment en ce que la synchronisation des corps HP peut être maintenue en régime transitoire (tant que la différence des vitesses ΔN2 reste faible).

Les conditions pour l'application de la synchronisation des corps BP et/ou HP comprennent par exemple une ou plusieurs des conditions suivantes :

- A1 : la différence des consignes de vitesses des rotors BP ou HP des moteurs est inférieure à 10% ;
- A2 : aucun défaut pouvant affecter la santé des moteurs ou engendrer des risques pour l'avion n'est détecté ;
- A3 : la différence des vitesses mesurées des rotors BP ou HP des moteurs est inférieure à 10% ;
- A' : la différence entre la consigne de vitesse et la vitesse mesurée BP ou HP de chaque rotor est inférieure à 10%;
- B : au moins l'un des moteurs est au ralenti ; et
- C : l'avion est en vol et n'est ni en phase de décollage, ni en phase de montée.

La synchronisation peut passer de l'état activé à l'état désactivé lorsque les conditions A1, A2, et éventuellement A3 (pour la synchronisation HP), ne sont pas remplies. La synchronisation peut être passée de l'état activé à l'état armé lorsque les conditions C ne sont pas remplies.

La présente invention concerne également une logique du front montant sur l'ordre pilote qui permet de ne pas armer la synchronisation si elle a été désactivée et que le bouton précité de la cabine de pilotage est resté enfoncé.

L'invention sera mieux comprise et d'autres caractéristiques, détails et avantages de celle-ci apparaîtront plus clairement à la lecture de la description qui suit, faite à titre d'exemple non limitatif et en référence aux dessins annexés, dans lesquels :

- la figure 1 est un schéma illustrant une logique d'activation selon l'invention pour la synchronisation des rotors des corps basse-pression des moteurs d'un avion ;
- la figure 2 est un graphe très schématique représentant l'évolution des consignes de synchronisation des rotors BP des moteurs d'un avion, en fonction du régime de ces moteurs ;
- la figure 3 est un schéma illustrant une logique d'activation selon l'invention pour la synchronisation des rotors des corps haute-pression des moteurs d'un avion ; et
- la figure 4 est un graphe très schématique représentant l'évolution des consignes de synchronisation des rotors HP des moteurs d'un avion, en fonction du régime de ces moteurs.

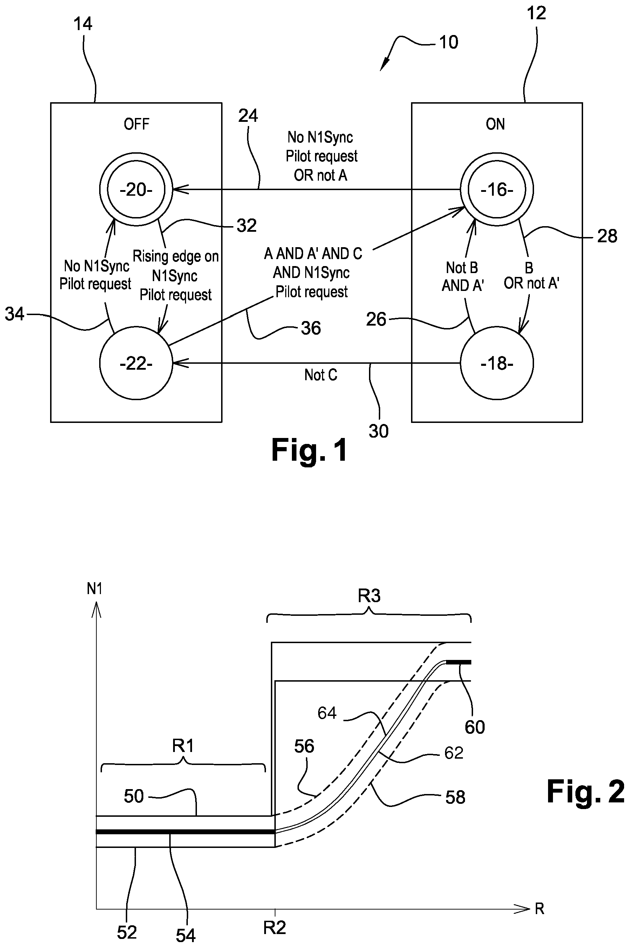

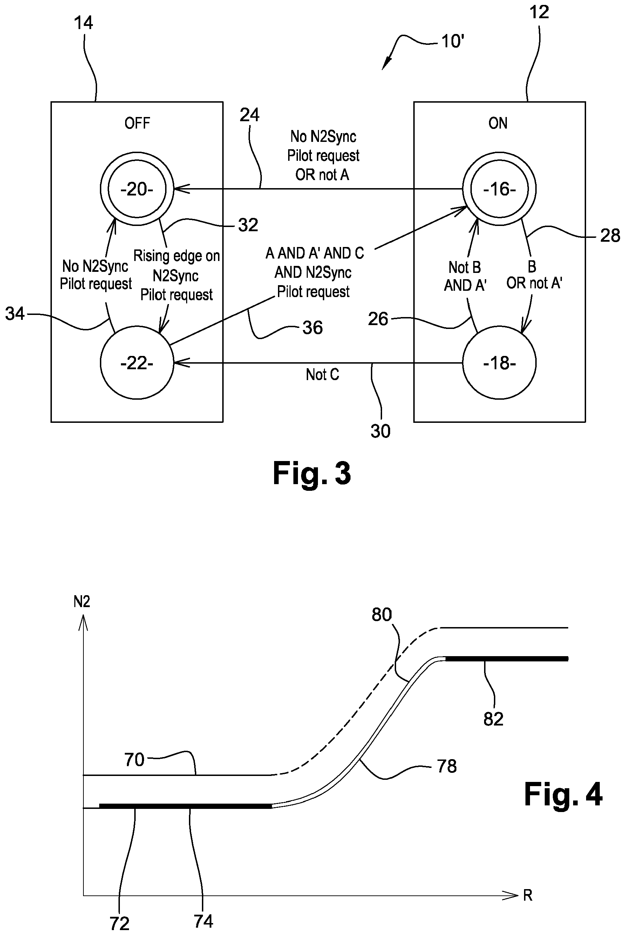

Les schémas des figures 1 et 3 représentent des logiques 10, 10' d'activation de la synchronisation des moteurs d'un avion selon la présente invention, et en particulier de moteurs à double corps, tels que des turboréacteurs ou des turbopropulseurs. Le schéma de la figure 1 représente la logique 10 d'activation de la synchronisation des rotors des corps basse-pression (BP) des moteurs et le schéma de la figure 3 représente la logique 10' d'activation de la synchronisation des rotors des corps haute-pression (HP) de ces moteurs.

Dans chaque logique d'activation 10, 10', la synchronisation peut être en mode ON ou marche (représenté par le rectangle 12) ou en mode OFF ou arrêt (représenté par le rectangle 14). Dans l'exemple représenté, la logique d'activation 10, 10' définit quatre états d'activation de la synchronisation : deux états en mode ON (état activé garanti 16 et état activé non garanti 18) et deux états en mode OFF (état désactivé 20 et état armé 22).

Les flèches 24 à 36 représentent les passages possibles d'un état de synchronisation à un autre état de synchronisation, certains de ces passages étant automatiques dès que des conditions d'application de la synchronisation changent, et d'autres passages nécessitant l'émission d'un ordre d'activation ou de désactivation par le pilote de l'avion.

Les conditions d'application de la synchronisation sont de deux types : des conditions de sécurité destinées à protéger les moteurs et l'avion et des conditions d'activation destinées à optimiser le fonctionnement des moteurs.

Dans l'exemple de réalisation représenté dans les dessins, la logique d'activation 10, 10' comprend quatre conditions, appelées respectivement A, A', B et C. Les conditions A, A', B et C de la logique d'activation 10 de la synchronisation des corps BP ne sont pas toutes identiques à celles de la logique d'activation 10' de la synchronisation des corps HP.

En ce qui concerne la synchronisation des corps BP (figure 1), les conditions A comprennent une condition d'activation A1 et une condition de sécurité A2. La condition d'activation A1 est :

$$\left| \Delta N1dmd\_PWM \right| < 5\%,$$

selon laquelle la différence des consignes de vitesses N1 des rotors BP des moteurs (en valeur absolue) doit être inférieure à 5%. $\Delta N1$ représente la différence entre les vitesses des rotors BP, « dmd » signifie que c'est la valeur de consigne de chaque moteur qui est prise en compte, et « PWM » signifie que cette valeur de consigne est propre à chaque moteur et est calculée par une fonction Power Management dans un calculateur de chaque moteur (cette fonction calcule les consignes N1 en fonction de la position de la manette des gaz et d'autres paramètres). Si les moteurs ont des régimes BP trop différents (A1 > 5% par exemple parce que les manettes de commande des moteurs dans la cabine de pilotage sont dans des positions différentes, ou parce que les consignes sont trop différentes du fait que l'écart entre les vitesses N1 des moteurs est trop différent pour que ces moteurs produisent une même poussée), la condition A1 n'est pas remplie. C'est donc l'écart entre les deux consignes d'origine qui est surveillé. La synchronisation peut donc être désactivée si les manettes de commande des moteurs sont dans des positions différentes (c'est-à-dire sont écartées l'une de l'autre).

La condition d'activation A2 est l'absence de détection d'un défaut pouvant endommager les moteurs ou engendrer des risques pour les moteurs ou l'avion et les passagers. En effet, la synchronisation étant une fonction de confort, aucun risque n'est pris et elle est désactivée en cas d'évènement moteur intempestif (pompage, survitesse, sous ou sur-poussée, etc.) ou de panne, pour éviter que le moteur sain se mette à suivre le comportement du moteur défaillant notamment.

Les conditions A1 et A2 sont cumulatives et doivent être toutes les deux remplies pour que les conditions A soient considérées comme remplies.

Comme indiqué par la flèche 24, ces conditions A doivent nécessairement être remplies pour l'activation de la synchronisation, c'est-à-dire pour que la synchronisation soit en mode ON. Dans le cas où ces conditions A ne sont pas remplies (ou lorsque les conditions « not A » sont remplies), la synchronisation est automatiquement désactivée et passe du mode ON (de l'état activé garanti 16 ou de l'état activé non garanti 18) au mode OFF (état désactivé 20). Ces conditions A, qui comprennent à la fois une condition d'activation A1 et une condition de sécurité A2, sont donc nécessaires pour l'activation de la synchronisation, et ce quels que soient les ordres transmis par le pilote. La sécurité est donc prépondérante par rapport au confort procuré par la synchronisation des moteurs de l'avion.

Comme indiqué dans ce qui précède, les conditions A comprennent deux conditions A1 et A2 cumulatives. Dans le cas ou l'une d'entre elles ne seraient plus remplies, la synchronisation se désactiverait, qu'elle soit à l'état activé garanti ou non garanti. En effet, sur un évènement moteur ou une panne, le pilote doit réagir et décider s'il souhaite réactiver la synchronisation une fois la panne corrigée. Sur un écart des consignes, c'est a priori le pilote qui en est à l'origine et c'est donc à lui que revient la décision de réactiver la synchronisation.

Comme indiqué sur la flèche 24, le passage de l'état activé (non garanti 18 ou garanti 16) à l'état désactivé 20 peut également résulter d'un ordre transmis par le pilote de l'avion qui souhaite désactiver la synchronisation (« No N1Sync Pilot request »). Les conditions « not A » et « No N1Sync Pilot request » ne sont pas cumulatives du fait du terme OR (ou). Il suffit donc que l'une ou l'autre de ces conditions soient remplies pour que la synchronisation soit désactivée.

Les conditions d'activation A' comprennent deux conditions d'activation A'1 et A'2, qui sont respectivement :

$$|\text{N1dmd\_ctrl1} - \text{N1sel1}| < 5\%,$$

et

$$|\text{N1dmd\_ctrl2} - \text{N1sel2}| < 5\%,$$

selon lesquelles la différence entre la consigne (« dmd », "demand" en anglais) et la valeur mesurée (« sel », "selected" en anglais) de la vitesse N1 de chaque rotor BP (en valeur absolue) doit être inférieure à 5%. « ctrl » signifie que c'est la consigne de régulation ("control" en anglais) courante qui est prise en compte, c'est-à-dire la consigne moyennée commune si on est en synchronisation. Ces conditions sont remplies lorsque les deux moteurs sont en régime stabilisé et ne sont donc pas en régime transitoire. A contrario, les conditions « not A' » sont remplies lorsqu'au moins l'un des moteurs est en régime transitoire.

Ces conditions A' doivent être nécessairement remplies pour activer la synchronisation. Toutefois, lorsqu'elles ne sont plus remplies, la synchronisation n'est pas nécessairement désactivée, comme cela sera expliqué dans ce qui suit.

Les conditions d'activation B sont remplies si au moins l'un des moteurs est au ralenti. Ces conditions sont utiles pour le passage entre l'état activé garanti et l'état activé non garanti, et inversement, lorsque l'avion est contrôlé par une boucle ralenti et que la manette de commande est en position ralenti.

Comme indiqué par la flèche 26, la synchronisation passe de l'état activé non garanti 18 à l'état activé garanti 16 si les conditions A' précitées sont remplies et que les conditions B ne sont pas remplies (ou que les conditions « not B' » sont remplies). La synchronisation passe de l'état activé garanti 16 à l'état activé non garanti 18 si l'une ou l'autre des conditions B sont remplies ou que les conditions A' ne sont pas remplies (ou inversement, que les conditions « not A' » sont remplies - flèche 28).

Autrement dit, la synchronisation passe de l'état activé non garanti 18 à l'état activé garanti 16 si les moteurs ne sont pas au régime de ralenti et si l'écart entre les valeurs de consigne et de mesure de la vitesse N1 de chaque moteur est inférieur à 5%.

A titre d'exemple, lorsque les moteurs sont en régime transitoire, les conditions A' ne sont pas remplies. La synchronisation passe à l'état activé non garanti car il serait inutile de désactiver la synchronisation puisque la régulation ne se fait plus par les vitesses N1. Le fait que la consigne de vitesse N1 soit la consigne propre du moteur ou la consigne commune de synchronisation importe peu. Lorsque les conditions A' seront à nouveau remplies, à la fin du transitoire, la synchronisation repassera automatiquement à l'état activé garanti.

On a représenté en figure 2 l'évolution de la vitesse N1 des rotors BP des moteurs d'un avion, lorsqu'un changement des régimes de ces moteurs intervient.

Dans l'exemple considéré, l'avion est équipé de deux moteurs seulement et le graphe de la figure 2 comprend deux courbes 50, 52 représentant les consignes des vitesses N1 propres aux moteurs, c'est-à-dire les consignes résultant des positions des manettes des gaz imposées par le pilote de l'avion. Ces courbes 50, 52 sont en forme de marche d'escalier et comprennent chacune une première partie horizontale représentant une consigne N1 constante car le régime R1 du moteur est stabilisé, une partie verticale représentant une variation de la consigne N1 car le régime R2 est transitoire, et une nouvelle partie horizontale représentant une consigne N1 constante car le régime R3 est à nouveau stabilisé.

Le passage du régime R1 stabilisé au régime R2 transitoire est dû à un déplacement des manettes des gaz par le pilote de l'avion. Comme cela est visible en figure 2, les consignes N1 propres aux moteurs sont légèrement différentes pour obtenir une même poussée, même si les manettes des gaz des moteurs sont dans la même position. On peut en effet constater que deux moteurs d'un même avion peuvent tourner à des vitesses légèrement différentes pour produire une même poussée.

La consigne N1 pour la synchronisation des rotors BP est égale à la moyenne des consignes N1 propres aux moteurs. Les vitesses N1 des moteurs adoptent donc cette consigne qui est schématiquement représentée par le trait continu épais 54 en figure 2, qui se situe entre les courbes 50 et 52 dans la première partie horizontale précitée de ces courbes.

Lorsque les conditions A' ne sont plus remplies, c'est-à-dire que les moteurs sont en régime transitoire, la synchronisation des rotors BP est passée à l'état activé non garanti. En transitoire, chaque moteur est régulé par une consigne en dN/dt, intégrée à partir de la vitesse du rotor courante. Ainsi, les portions de courbe 56 et 58 représentent l'évolution de la vitesse N1 du rotor BP que chaque moteur aurait eu sans la synchronisation: ils partent de leur vitesse courante, et suivent deux courbes obtenues grâce à l'intégration de leurs consignes de transitoire en dN/dt, qui sont proches. Or, les deux moteurs étaient synchronisés juste avant leur passage en transitoire. Lorsqu'ils passent en transitoire, ils ont donc pratiquement la même vitesse N1 du rotor BP courante. Leurs vitesses suivent donc deux courbes 62 et 64 sensiblement identiques, issues de deux consignes en dN/dt elles aussi proches, bien que techniquement ils ne soient par sur la même consigne de synchronisation. Lorsque les conditions A' sont à nouveau remplies, la synchronisation est passée à l'état activé garanti et les vitesses N1 peuvent adopter la consigne commune pour la synchronisation des rotors BP, qui est égale à la moyenne des consigne propres aux moteurs (trait continu épais 60 en figure 2).

Les conditions d'activation C sont remplies lorsque l'avion est en vol et qu'il n'est ni en phase de décollage ni en phase de montée. Les manettes de commande des moteurs ne sont alors pas au-delà de la position « Max Climb ».

Comme indiqué par la flèche 30, ces conditions C doivent nécessairement être remplies pour l'activation de la synchronisation, c'est-à-dire pour que la synchronisation soit en mode ON. Dans le cas où ces conditions C ne sont pas remplies (ou lorsque les conditions « not C » sont remplies), la synchronisation passe automatiquement du mode ON (de l'état activé garanti 16 ou de l'état activé non garanti 18) au mode OFF (état armé 22). La synchronisation ne passe donc pas à l'état désactivé pour qu'elle puisse se réactiver automatiquement sans que le pilote réitère son ordre.

Un ordre pilote (N1Sync Pilot Request) est nécessaire pour passer la synchronisation de l'état désactivé 20 à l'état armé 22 (flèche 32), par appui sur un bouton (N1Sync) correspondant, dans la cabine de pilotage.

La cabine de pilotage de l'avion comprend deux boutons d'activation de la synchronisation, un premier bouton (N1Sync) pour activer la synchronisation des corps BP des moteurs et un second bouton (N2Sync) pour activer la synchronisation des corps HP des moteurs. Chacun de ces boutons peut adopter deux positions, respectivement ON et OFF. En position ON, le bouton est enfoncé et allumé et, en positon OFF, il est sorti et est éteint. Le pilote ne peut pas demander simultanément la synchronisation des deux corps des moteurs. Dans le cas où il appuie sur le premier bouton pour l'enfoncer, alors que le second bouton est déjà en position enfoncée, ce second bouton se désenclenche automatiquement pour revenir en positon sortie.

L'ordre du pilote (N1Sync Pilot Request) nécessite donc un appui sur le bouton N1Sync pour l'enfoncer et le mettre en position ON.

Un autre ordre du pilote (No N1Sync Pilot Request) est nécessaire pour passer la synchronisation de l'état armé 22 à l'état désactivé 20 (flèche 34), par appui à nouveau sur le bouton N1Sync, de façon à ce qu'il soit en position sortie ou OFF.

Comme on l'a vu dans ce qui précède, un ordre du pilote (No N1Sync Pilot Request) peut être nécessaire pour passer la synchronisation de l'état activé à l'état désactivé (flèche 24). Cet ordre du pilote nécessite également un appui sur le bouton N1Sync de façon à le mettre en positon sortie ou OFF.

Dans le cas où le passage de la synchronisation de l'état activé (16 ou 18) à l'état désactivé 20 résulte du fait que les conditions A ne sont pas remplies (flèche 24), la synchronisation est à l'état désactivé alors que le bouton N1Sync est toujours en position enfoncée ou ON. Pour armer la synchronisation (flèche 32), le pilote devra appuyer deux fois sur le bouton pour d'abord le désenclencher, puis pour le réenclencher. En effet, la logique de l'invention doit détecter un front montant sur l'ordre pilote pour que la synchronisation soit passée à l'état activé.

La flèche 36 représente le passage de la synchronisation de l'état armé 22 à l'état activé 16. Les conditions A, A', et C doivent être remplies pour activer la synchronisation. Il est de plus nécessaire que le bouton N1Sync soit en position ON ou enfoncée, ce qui signifie que le pilote a déjà donné l'ordre d'activer la synchronisation (N1Sync Pilot Request). Ces conditions sont cumulatives et doivent donc toutes être remplies pour activer la synchronisation.

Aucun ordre du pilote n'est donc nécessaire pour confirmer et activer la synchronisation lorsque le bouton N1Sync est en position ON ou enfoncée et que la synchronisation est passée à l'état armé 22 du fait que les conditions C n'ont plus été remplies (flèche 30). Toutefois, comme cela est indiqué sur la flèche 32, un ordre du pilote est nécessaire pour réarmer la synchronisation qui est passée à l'état désactivé du fait que les conditions A n'ont plus été remplies (flèche 24). La réactivation de la synchronisation n'est donc automatique que dans certains cas, ce qui permet d'améliorer les performances des moteurs et d'assurer une protection des moteurs et de l'avion.

En ce qui concerne la synchronisation des corps HP (logique d'activation 10' en figure 3), les conditions A comprennent deux conditions d'activation A1 et A3 et une condition de sécurité A2. Les conditions d'activation A1 et A3 sont :

$$\left| \Delta N1dmd \right| < 5\%,$$

et

$$\left| \Delta N2sel \right| < 5\%,$$

selon lesquelles la différence des valeurs de consigne (« dmd ») des vitesses des rotors BP des moteurs (en valeur absolue) doit être inférieure à 5%, et la différence des valeurs mesurées (« sel ») des vitesses des rotors HP des moteurs (en valeur absolue) doit être inférieure à 5%. $\Delta N1$ représente la différence entre les vitesses des rotors BP et $\Delta N2$ représente la différence entre les vitesses des rotors HP. Pour la synchronisation des corps HP, un moteur est désigné maître, l'autre est l'esclave. Le moteur esclave prend pour nouvelle consigne en vitesse HP la mesure de la vitesse HP de l'autre moteur. Il n'est donc pas nécessaire de différencier la consigne "N1dmd_PWM" de la consigne "N1dmd_ctrl", car la consigne de vitesse N1 n'est pas modifiée par la synchronisation.

La condition supplémentaire A3 permet de désactiver la synchronisation si l'écart entre les deux mesures de vitesses N2 est inférieur à 5%. Il est en effet nécessaire de vérifier cela à cause de la nature de ce type de synchronisation où la consigne du moteur esclave est la mesure de l'autre moteur. Cela évite d'une part les sauts de poussée trop importants à l'activation/désactivation de la synchronisation, et cela évite surtout le risque d'un moteur maître fou qui subirait une panne ou évènement moteur non détecté et contaminerait le moteur esclave sain.

La condition d'activation A2 reste l'absence de détection d'un défaut pouvant endommager les moteurs ou engendrer des risques pour les moteurs ou l'avion et les passagers.

Les conditions A1, A2 et A3 sont cumulatives et doivent être toutes remplies pour que les conditions A soient considérées comme remplies.

Comme pour la synchronisation des corps BP des moteurs, la synchronisation des corps HP passe de l'état activé (garanti 16 ou non garanti 18) à l'état désactivé en fonction des résultats des vérifications des conditions A (flèche 24).

Comme indiqué sur cette flèche 24, le passage de l'état activé 16, 18 à l'état désactivé 20 peut résulter d'un ordre transmis par le pilote de l'avion qui souhaite désactiver la synchronisation (« No N2Sync Pilot request »), en appuyant sur le bouton N2Sync pour le mettre en position OFF ou sortie.

Les conditions d'activation A' comprennent deux conditions d'activation cumulatives A'1 et A'2, qui sont respectivement :

$$\left| N1dmd1 - N1sel1 \right| < 5\%,$$

et

$$\left| N1dmd2 - N1sel2 \right| < 5\%,$$

selon lesquelles la différence entre la valeur de consigne et la valeur mesurée de la vitesse N1 de chaque rotor BP (en valeur absolue) doit être inférieure à 5%.

La figure 4 représente l'évolution de la vitesse N2 des rotors HP des moteurs d'un avion, lorsqu'un changement des régimes de ces moteurs intervient.

Les courbes 70, 72 représentent les consignes des vitesses N2 propres aux moteurs, et comprennent chacune une première partie horizontale pour laquelle les consignes N2 sont constantes pendant un régime R1 stabilisé, une partie inclinée pour laquelle les consignes N2 augmentent pendant un régime R2 transitoire, et une nouvelle partie horizontale pour laquelle les consignes N2 sont constantes pendant un régime R3 stabilisé.

Les positions de ces courbes 70, 72, l'une par rapport à l'autre, permettent d'identifier le moteur maître pour la synchronisation des corps HP. Le moteur maître est celui dont le rotor HP tourne à la plus faible vitesse N2 pour fournir une poussée donnée, c'est-à-dire celui correspondant à la courbe 72 en figure 4.

La consigne N2 pour la synchronisation des rotors HP est égale à la consigne propre au moteur maître, c'est-à-dire à la consigne correspondant à la courbe 72. Cette consigne N2 est schématiquement représentée par le trait continu épais 74 en figure 4, qui se situe sur la courbe 72 dans la première partie horizontale précitée de cette courbe.

En régime transitoire, la synchronisation des rotors HP passe à l'état activé non garanti. Comme en synchronisation des vitesses N1, les vitesses N2 de chaque moteur suivent des trajectoires 78 et 80 sensiblement identiques, car issues de consignes en dN/dt proches, dont l'intégration se fait à partir de la même valeur initiale. Lorsque le régime est à nouveau stabilisé (R3), la synchronisation est passée à l'état activé garanti et les vitesses N2 adoptent la consigne N2 pour la synchronisation des rotors HP, qui est égale à la consigne propre au moteur maître (trait continu épais 82 en figure 2).

Les conditions d'activation B et C de la logique d'activation 10' des corps HP des moteurs sont identiques à celles décrites ci-dessus, concernant la logique d'activation 10 des corps BP de ces moteurs.

L'invention est applicable à la synchronisation de deux, trois, quatre moteurs, voire plus, d'un même avion. Dans le cas de la synchronisation des corps BP de moteurs du type à double corps, les consignes N1 de synchronisation peuvent être égales à la moyenne des consignes N1 propres aux différents moteurs. Concernant la synchronisation des corps HP des moteurs, les consignes N2 pour la synchronisation sont de préférence les consignes propres à l'un des moteurs considéré comme le moteur maître, les autres moteurs étant considérés comme des moteurs esclaves destinés à suivre le comportement du moteur maître.

## Revendications

1. Procédé de synchronisation en vol des moteurs d'un avion au moyen d'au moins une logique d'activation destinée à vérifier des conditions de sécurité et/ou d'activation pour l'application de la synchronisation, où ladite au moins une logique d'activation (10, 10'):

   - définit au moins un état désactivé (20), un état armé (22) et un état activé (16, 18), et
   - comprend:

     -- le passage (32) de la synchronisation de l'état désactivé à l'état armé lorsqu'un ordre d'activation est donné par un pilote de l'avion ;
     -- le passage (36) de la synchronisation de l'état armé à l'état activé lorsque certaines conditions de sécurité et/ou d'activation sont remplies ;
     -- le passage (24, 34) de la synchronisation de l'état activé ou armé à l'état désactivé lorsqu'un ordre de désactivation est donné par le pilote ou lorsque des conditions de sécurité ne sont pas remplies, et

-- le passage (30) de la synchronisation de l'état activé à l'état armé lorsque certaines conditions d'activation ne sont pas remplies.

2. Procédé selon la revendication 1, **caractérisé en ce qu'**en fonction desdites conditions, le passage (36) de la synchronisation de l'état armé à l'état activé s'effectue vers l'un ou l'autre parmi deux états activés distincts, comprenant un état activé dit garanti (16) et un état activé dit non garanti (18).

3. Procédé selon la revendication 2, **caractérisé en ce que** la logique d'activation (10, 10') comprend le passage de la synchronisation de l'état armé à l'état activé non garanti si une partie prédéfinie seulement des conditions d'activation sont remplies, et à l'état activé garanti si toutes les conditions d'activation sont remplies.

4. Procédé selon la revendication 2 ou 3, **caractérisé en ce que** la synchronisation passe de l'état activé non garanti (18) à l'état activé garanti (16), ou inversement, en fonction de changements intervenus dans les résultats des vérifications des conditions d'activation.

5. Procédé selon l'une des revendications précédentes, **caractérisé en ce que**, les moteurs étant du type à double corps et comprenant un corps basse-pression (BP) et un corps haute-pression (HP), l'activation de la synchronisation des corps BP des moteurs est réalisée selon une première logique d'activation (10) et l'activation de la synchronisation des corps HP des moteurs est réalisée selon une seconde logique d'activation (10').

6. Procédé selon la revendication 5, **caractérisé en ce que** les conditions de la synchronisation des corps BP sont différentes de celles de la synchronisation des corps HP.

7. Procédé selon la revendication 5 ou 6, **caractérisé en ce que** les conditions pour la synchronisation des corps BP et/ou HP comprennent une ou plusieurs des conditions suivantes :

  - A1 : la différence des consignes de vitesse (N1, N2) des rotors BP ou HP des moteurs est inférieure à 5% ;
  - A2 : aucun défaut pouvant affecter la santé des moteurs ou engendrer des risques pour l'avion n'est détecté ;
  - A3 : la différence des vitesses mesurées des rotors BP ou HP des moteurs est inférieure à 5% ;
  - A' : la différence entre la consigne de vitesse et la vitesse mesurée de chaque rotor BP ou HP est inférieure à 5%;

  - B : au moins l'un des moteurs est au ralenti ; et
  - C : l'avion est en vol et n'est ni en phase de décollage ni en phase de montée.

8. Procédé selon la revendication 7, **caractérisé en ce que** la synchronisation passe de l'état activé (16, 18) à l'état désactivé (20) lorsque les conditions A1, A2, et éventuellement A3, ne sont pas remplies.

9. Procédé selon la revendication 7 ou 8, **caractérisé en ce que** la synchronisation passe de l'état activé (16, 18) à l'état armé (22) lorsque les conditions C ne sont pas remplies.

**Patentansprüche**

1. Verfahren zum Synchronisieren der Triebwerke eines Flugzeugs im Flug mittels zumindest einer Aktivierungslogik, die dazu bestimmt ist, Sicherheits- und/oder Aktivierungsbedingungen für die Anwendung der Synchronisierung zu prüfen, wobei die zumindest eine Aktivierungslogik (10, 10')

  - zumindest einen deaktivierten Zustand (20), einen Bereitschaftszustand (22) und einen aktivierten Zustand (16, 18) definiert, und
  - umfasst:

    -- den Übergang (32) der Synchronisierung von dem deaktivierten Zustand in den Bereitschaftszustand dann, wenn ein Aktivierungsbefehl von einem Piloten des Flugzeugs erteilt wird;
    -- den Übergang (36) der Synchronisierung von dem Bereitschaftszustand in den aktivierten Zustand dann, wenn bestimmte Sicherheits- und/oder Aktivierungsbedingungen erfüllt sind;
    -- den Übergang (24, 34) der Synchronisierung von dem aktivierten Zustand bzw. Bereitschaftszustand in den deaktivierten Zustand dann, wenn ein Deaktivierungsbefehl von dem Piloten erteilt wird oder wenn die Sicherheitsbedingungen nicht erfüllt sind, und
    -- den Übergang (30) der Synchronisierung von dem aktivierten Zustand in den Bereitschaftszustand dann, wenn bestimmte Aktivierungsbedingungen nicht erfüllt sind.

2. Verfahren nach Anspruch 1, **dadurch gekennzeichnet, dass** in Abhängigkeit von den Bedingungen der Übergang (36) der Synchronisierung von dem Bereitschaftszustand in den aktivierten Zustand zum einen oder anderen von zwei verschiedenen aktivierten Zuständen erfolgt, die einen sogenannten garantierten aktivierten Zustand (16) und einen sogenannten nicht garantierten aktivierten Zustand (18) umfassen.

3. Verfahren nach Anspruch 2, **dadurch gekennzeichnet, dass** die Aktivierungslogik (10, 10') den Übergang der Synchronisierung von dem Bereitschaftszustand in den nicht garantierten aktivierten Zustand dann umfasst, wenn nur ein vorbestimmter Teil der Aktivierungsbedingungen erfüllt ist, und in den garantierten aktivierten Zustand dann, wenn sämtliche Aktivierungsbedingungen erfüllt sind.

4. Verfahren nach Anspruch 2 oder 3, **dadurch gekennzeichnet, dass** die Synchronisierung von dem nicht garantierten aktivierten Zustand (18) in den garantierten aktivierten Zustand (16) bzw. umgekehrt in Abhängigkeit von den Änderungen übergeht, die bei den Ergebnissen der Überprüfungen der Aktivierungsbedingungen auftreten.

5. Verfahren nach einem der vorangehenden Ansprüche, **dadurch gekennzeichnet, dass** bei Triebwerken vom Typ mit Doppelkörper, enthaltend einen Niederdruckkörper (BP) und einen Hochdruckkörper (HP), die Aktivierung der Synchronisierung der Körper BP der Triebwerke nach einer ersten Aktivierungslogik (10) erfolgt und die Aktivierung der Synchronisierung der Körper HP des Triebwerke nach einer zweiten Aktivierungslogik (10') erfolgt.

6. Verfahren nach Anspruch 5, **dadurch gekennzeichnet, dass** die Bedingungen der Synchronisierung der Körper BP verschieden von denen der Synchronisierung der Körper HP sind.

7. Verfahren nach Anspruch 5 oder 6, **dadurch gekennzeichnet, dass** die Bedingungen für die Synchronisierung der Körper BP und/oder HP eine oder mehrere der nachfolgenden Bedingungen umfassen:

   - A1: die Differenz bei den Geschwindigkeitssollwerten (N1, N2) der Rotoren BP bzw. HP der Triebwerke ist geringer als 5 %;
   - A2: es liegt kein erfasster Fehler vor, der die Unversehrtheit der Triebwerke beeinträchtigen oder Risiken für das Flugzeug hervorrufen könnte;
   - A3: die Differenz bei den Geschwindigkeitsmesswerten der Rotoren BP und HP der Triebwerke ist geringer als 5 %;
   - A': die Differenz zwischen dem Geschwindigkeitssollwert und dem Geschwindigkeitsmesswert eines jeden Rotors BP bzw. HP ist geringer als 5 %;
   - B: zumindest eines der Triebwerke ist im Leerlauf; und
   - C: das Flugzeug ist im Flug und ist weder in der Steigflugphase noch in der Abhebephase.

8. Verfahren nach Anspruch 7, **dadurch gekennzeichnet, dass** die Synchronisation von dem aktivierten Zustand (16, 18) in den deaktivierten Zustand (20) dann übergeht, wenn die Bedingungen A1, A2 und gegebenenfalls A3 nicht erfüllt sind.

9. Verfahren nach Anspruch 7 oder 8, **dadurch gekennzeichnet, dass** die Synchronisierung von dem aktivierten Zustand (16, 18) in den Bereitschaftszustand (22) dann übergeht, wenn die Bedingungen C nicht erfüllt sind.

**Claims**

1. A method of synchronizing engines of an airplane inflight by means of at least one activation logic for verifying safety and/or activation conditions in order to apply synchronization, wherein said at least one activation logic (10,10'):

   - defines at least a deactivated state (20), a primed state (22), and an activated state (16,18), and
   - comprises:

      -- passing (32) synchronization from the deactivated state to the primed state when a pilot of the airplane gives an activation order;
      -- passing (36) synchronization from the primed state to the activated state when certain safety and/or activation conditions are satisfied,
      -- passing (24,34) synchronization from the activated state or the primed state to the deactivated state when a deactivation order is given by the pilot or when certain of said safety conditions are not satisfied, and,
      -- passing (30) synchronization from the activated state to the primed state when certain activation conditions are not satisfied.

2. The method according to claim 1, **characterized in that**, as a function of said conditions, passing (36) synchronization from the primed state to the activated state is operated to one of two distinct activated states, comprising a guaranteed activated state (16) and a non-guaranteed activated state (18).

3. The method according to claim 2, **characterized in that** the activation logic (10,10') comprises passing synchronization from the primed state to the non-guaranteed activated state when only a predefined part of the activation conditions are satisfied, and to the guaranteed activated state when all the activation conditions are satisfied.

4.  The method according to claim 2 or 3, **characterized in that** the synchronization passes from the non-guaranteed activated state (18) to the guaranteed activated state (16), or vice versa, as a function of changes occurring in the results of said periodic verifying of activation conditions.

5.  The method according to anyone of the preceding claims, **characterized in that** the engines are two-spool engines, each having a LP, low pressure, spool and a HP, high pressure, spool, and synchronization of the LP spools of the engines is activated in accordance with a first of said activation logic (10) and synchronization of the HP spools of the engines is activated in accordance with a second (10') of said activation logic.

6.  The method according to claim 5, **characterized in that** the conditions for synchronizing the LP spools are different from the conditions for synchronizing the HP spools

7.  The method according to claim 5 or 6, **characterized in that** the conditions for synchronizing the LP and/or HP spools comprise one or more of the following conditions:

> • A1: the difference between the setpoints for the speeds (N1, N2) of the LP or HP rotors of the engines is less than 5%;
> • A2: no fault has been detected that might affect the health of the engines or that might generate risks for the airplane;
> • A3: the difference between the measured speeds of the LP or HP rotors of the engines is less than 5%;
> • A': the difference between the speed setpoint and the measured speed for each LP or HP rotor is less than 5%;
> • B: at least one of the engines is idling; and
> • C: the airplane is in flight and is neither in a takeoff stage nor in a climbing stage.

8.  The method according to claim 7, **characterized in that** the synchronization passes from the activated state (16,18) to the deactivated state (20) when the conditions A1, A2 and possibly A3 are not satisfied.

9.  A method according to claim 7 or 8, **characterized in that** the synchronization passes from the activated state (16,18) to the primed state (22) when the conditions C are not satisfied.

14

24

12

10

OFF

ON

No N1Sync
Pilot request
OR not A

-20-

-16-

32

28

No N1Sync
Pilot request

Rising edge on
N1Sync
Pilot request

A AND A' AND C
AND N1Sync
Pilot request

Not B
AND A'

B
OR not A'

34

26

-22-

36

-18-

Not C

30

## Fig. 1

N1

R3

R1

56

64

60

50

62

58

## Fig. 2

52    54

R2

R

**Fig. 3**

**Fig. 4**

## RÉFÉRENCES CITÉES DANS LA DESCRIPTION

**Documents brevets cités dans la description**

- EP 0322342 A
- FR 2639444 A1